# EUROPEAN PATENT SPECIFICATION

(11) **EP 0 433 907 B1**
(45) Date of publication and mention of the grant of the patent: **17.04.1996**
(21) Application number: 90124201.6
(22) Date of filing: 14.12.1990
(51) Int. Cl.: G02B 23/18

(54) **Binoculars**
Fernglas
Binoculaires

(30) Priority: 21.12.1989 JP 147601/89
(43) Date of publication of application: 26.06.1991
(73) Proprietor: NIKON CORPORATION, Tokyo (JP)
(72) Inventor: Nobuo, Hashimoto, Tokorozawa-shi, Saitama-ken (JP); Ken, Moro, Setagaya-ku, Tokyo (JP)
(74) Representative: Weser, Wolfgang

(56) References cited:
- GB-A- 1 427 004
- US-A- 4 202 598
- US-A- 4 264 121
- Bergmann-Schäfer: "Lehrbuch der Experimentalphysik", Band 3, Optik, Berlin - New York 1978, pp. 150, 151

## Description

### BACKGROUND OF THE INVENTION

### Field of the Invention

This invention relates to binoculars for enlargedly observing distant objects of observation therethrough, and in particular to improvements in the lens body of binoculars through which objects of observation can be observed with the lens body held in hands.

### Related Background Art

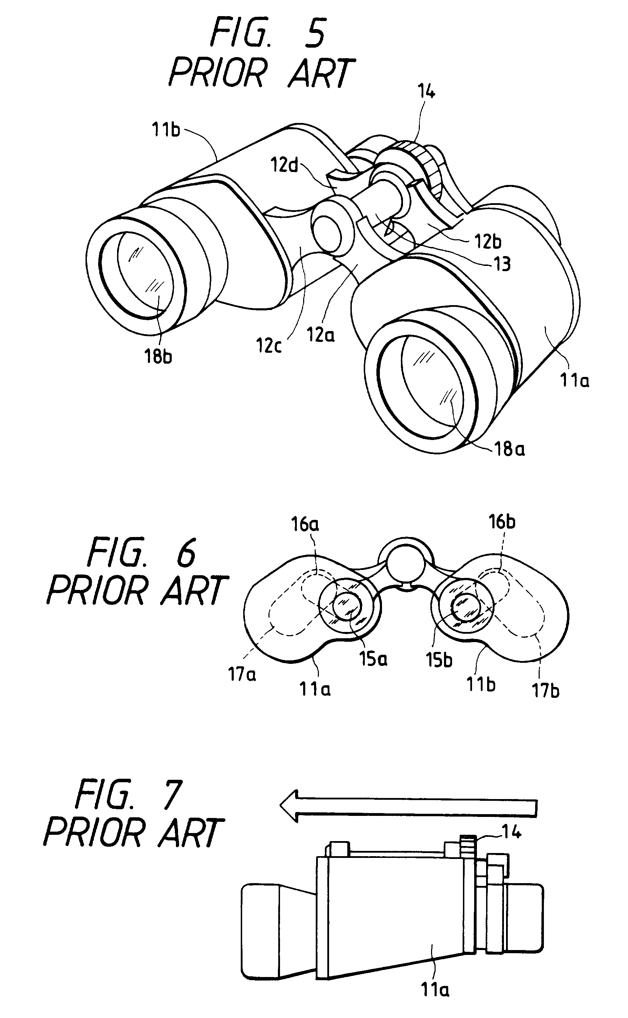

Binoculars of this kind, as shown in Figure 5 of the accompanying drawings, are widely known, as for example from a variety of textbooks on optics, like Bergmann-Schäfer: "Lehrbuch der Experimentalphysik", vol. 3 Optik, Berlin - New York 1978, p. 150 and 151. Such a pair of binoculars is comprised of right and left lens barrels 11a and 11b being provided with a pair of right and left eyepieces and a pair of right and left objective lenses, support arms 12a-12d integrally provided on respective ones of said lens barrels 11a and 11b, and a shaft 13 for rotatably and movably connecting said lens barrels 11a and 11b together through the arms 12a-12d. Also, as shown, a focusing knob 14 is journalled to one end of the shaft 13 which is located on the eyepiece side.

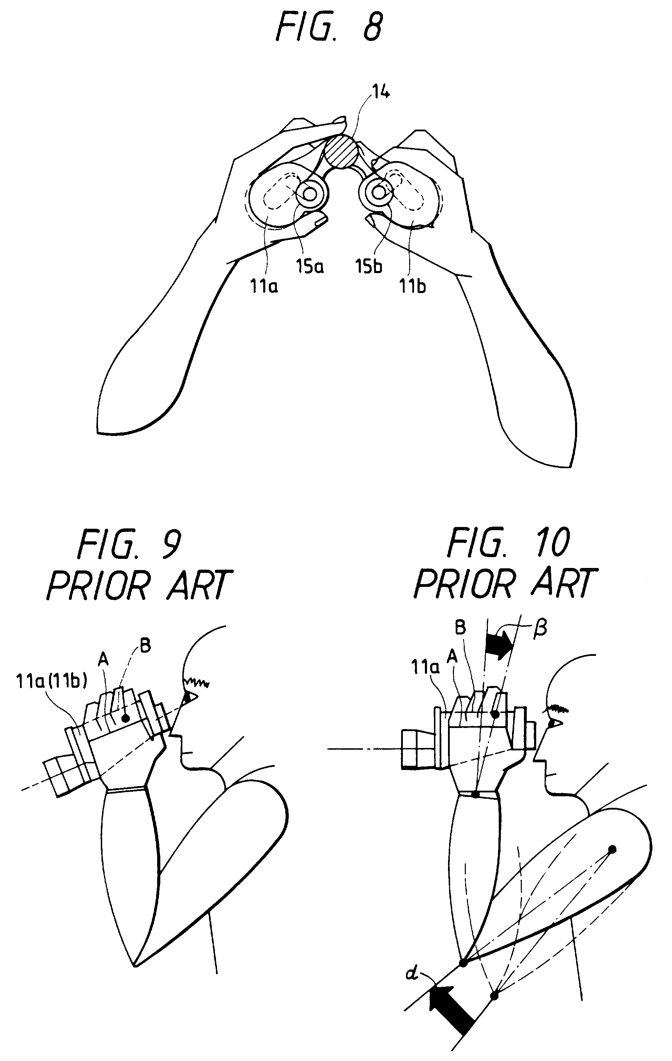

Within the right and left lens barrels 11a and 11b, as shown in Figure 6 of the accompanying drawings, each two prisms 16a, 17a and 16b, 17b orthogonal to each other are provided so that the erect image of an object can be observed through the eyepieces 15a and 15b, and the images of the object of observation formed by the objective lenses 18a and 18b shown in Figure 5 are projected toward the eyepieces 15a and 15b by the left prisms 16a, 17a and the right prisms 16b, 17b.

When the observer makes observation while holding the right and left lens barrels 11a and 11b in his hands, a portion of the focusing knob 14 is located on the upper portion of the lens barrel 11a as shown in Figure 7 of the accompanying drawings, and focus adjustment is accomplished by rotating the focusing knob 14 by the index finger of one hand as shown in Figure 8 of the accompanying drawings.

When the observer brings the binoculars constructed as described above close to his eyes by grasping the right and left lens barrels 11a and 11b in his hands and bending his arms, as shown in Figure 9, a straight line A passing through the base articulation regions of the fingers of the hands grasping the right and left lens barrels 11a and 11b is downwardly inclined. Also, the lens barrels are held so that the upper surfaces B thereof may be along the line A and therefore, the collimation axes of the binoculars substantially parallel to the upper surfaces B (the optic axes of the objective lenses) are downwardly inclined.

To shift the direction of observation of the object (the collimation axes) from the oblique direction shown in Figure 9 to the horizontal direction, the observer must raise his arm by an angle α from a broken line position to a solid line position as shown in Figure 10 of the accompanying drawings, and further twist his wrist by an angle β toward this side, and the support of the binoculars is not stable. Moreover, if the observer continues to observe the object of observation while keeping his wrist thus twisted, a burden is exerted on the twisted wrist to fatigue the observer, and this has led to the disadvantage that observation becomes difficult. Also, when the observer takes the binoculars out of the containing case and observes the horizontal direction from first, he must raise his arms greatly and twist his wrists toward this side, and this has led to the disadvantage that motion is complicated and takes much time from after he takes out the binoculars until he assumes the posture shown in Figure 10.

### SUMMARY OF THE INVENTION

Accordingly, the present invention has been made in view of these problems and an object thereof is to overcome the above-noted disadvantages peculiar to the prior-art binoculars and to provide binoculars which does not require time even if the observer assumes the posture of observing along the horizontal direction and which does not fatigue the observer and which can be stably supported for a long time.

To achieve the above object, the binoculars according to the present invention are provided with the features as recited in claim 1.

In the binoculars according to the present invention constructed as described above, the cylindrical portions of the right and left lens barrels are formed into a shape obliquely lowered toward the objective side and therefore, the observer can easily observe the horizontal direction simply by bending his arms, without twisting his wrists in a direction toward his face.

### BRIEF DESCRIPTION OF THE DRAWINGS

Figure 1 is a perspective view of prism binoculars according to an embodiment of the present invention.

Figure 2 is a side view of the lens barrel of the binoculars shown in Figure 1.

Figure 3 is a rear view of the eyepiece side showing a state in which the binoculars of Figure 1 is held in both hands.

Figure 4 is an illustration showing a state in which the binoculars of Figure 1 is supported at the level of the observer's eyes.

Figure 5 is a perspective view of binoculars according to the prior art.

Figure 6 is a rear view of the eyepiece side of the binoculars shown in Figure 5.

Figure 7 is a side view of the binoculars of Figure 5.

Figure 8 is a rear view of the eyepiece side showing a state in which the prior-art binoculars shown in Figure 5 is held in both hands.

Figure 9 is an illustration showing a state in which the prior-art binoculars shown in Figure 5 has been moved to the level of the observer's eyes with the observer's arms bent.

Figure 10 is an illustration showing a state in which the prior-art binoculars supported in the state shown in Figure 9 is held in the observation position in the horizontal direction.

### DESCRIPTION OF THE PREFERRED EMBODIMENT

An embodiment of the present invention will hereinafter be described in detail with reference to the accompanying drawings.

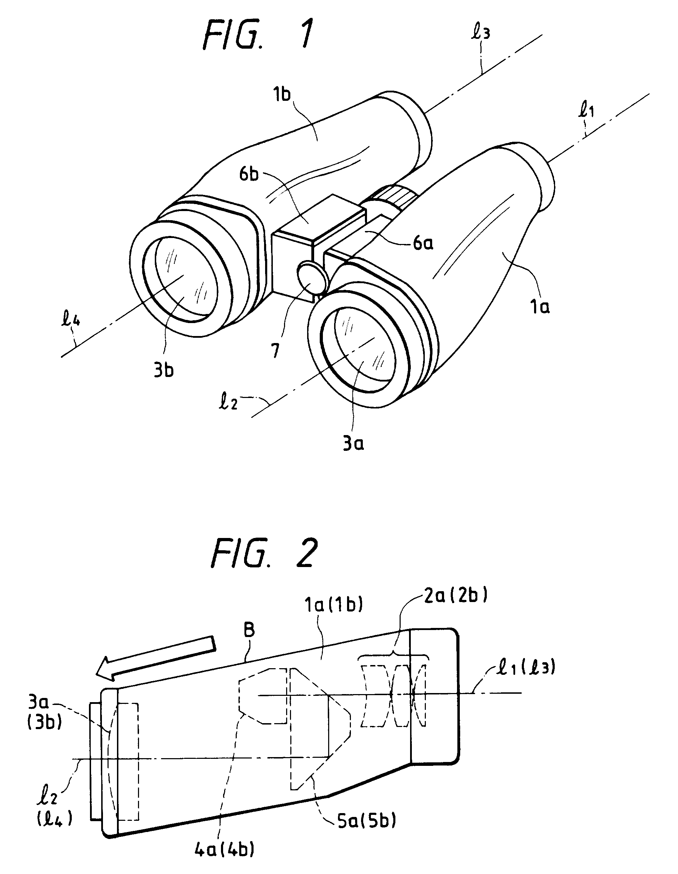

Figure 1 is a perspective view of center focus type prism binoculars according to an embodiment of the present invention, and Figure 2 is a side view of the lens barrel portion thereof.

In the right and left lens barrels 1a and 1b of the binoculars shown in Figure 1, the cylindrical portions of the lens barrels 1a and 1b from the objective side end portion to the vicinity of the eyepiece side end portion are formed into the shape of inclined cylinders obliquely lowered toward the left objective side relative to an optical axis which will be described later. Within the lens barrel 1a, an eyepiece 2a and an objective lens 3a are disposed on the eyepiece side and the objective side in such a manner that the optic axes ℓ₁ and ℓ₂ of the eyepiece and the objective lens, respectively, are located along the horizontal direction, and within the cylindrical portion, reflecting prisms 4a and 5a are disposed to erect the inverted image of an object of observation obtained by the objective lens 3a and project it toward the eyepiece 2a. This lens barrel 1a is the right lens barrel in Figure 1, and within the left lens barrel 1b bisymmetrical with the lens barrel 1a, optical systems 2b-5b are disposed bisymmetrically with the optical systems 2a-5a as in the construction shown in Figure 2.

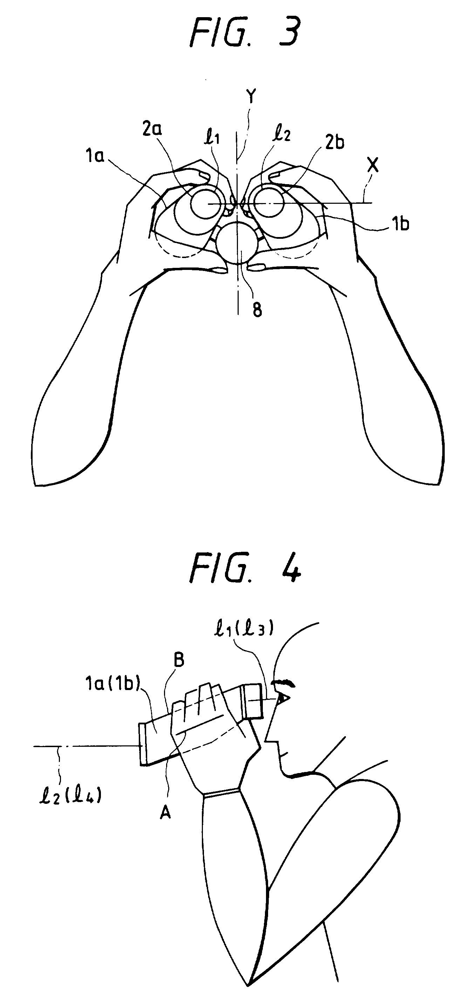

Support members 6a and 6b are secured to the right and left lens barrels 1a and 1b, respectively, as shown in Figure 1, and the lens barrels 1a and 1b are rotatably connected together by a shaft 7 through the support members 6a and 6b. The shaft 7 is installed along and in parallelism to the directions of the optic axes ℓ₁-ℓ₄ of the eyepieces 2a, 2b and the objective lenses 3a, 3b. When the right and left lens barrels 1a and 1b are rotatively moved about the shaft 7 with their respective support members 6a and 6b, the optic axes ℓ₁-ℓ₄ move with the lenses while keeping their parallelism to the axial direction of the shaft 7 and the distance between the optic axes ℓ₁ and ℓ ₂ of the right and left eyepieces (the eye spacing) is adjusted because the intervals between the shaft 7 and the respective optic axes are constant. A focusing knob 8 is journalled to one end of the shaft 7 which is located on the eyepiece side, and this focusing knob 8, together with the shaft 7, is located below a plane X containing the optic axes ℓ ₁ and ℓ₂ of the pair of eyepieces 2a and 2b shown in Figure 3. Also, within the support members 6a and 6b, there are disposed transmission mechanisms (not shown, for sliding the objective lenses 3a and 3b within the lens barrels 1a and 1b along the directions of the optic axes ℓ₂ and ℓ₄ in response to the rotative operation of the focusing knob 8.

Figure 4 shows a posture at which the observer is observing in the horizontal direction while holding in both hands the cylindrical portions of the lens barrels 1a and 1b formed obliquely with respect to the optic axes (ℓ₁-ℓ₄) as previously described. Since the shaft 7 and the focusing knob 8 are disposed below the plane X containing the optic axes ℓ₁ and ℓ₃ of the eyepieces 2a and 2b, respectively, shown in Figure 3, the thumbs of both hands grasping the cylindrical portions of the lens barrels 1a and 1b as shown in Figure 4 can be brought into contact with the focusing knob 8 shown in Figure 3 along the outer peripheral surfaces of the lower portions of the cylindrical portions which are adjacent to the eyepiece side and thus, even an observer having small hands can bring his thumbs into contact with the focusing knob 8 while grasping the cylindrical portions of the lens barrels 1a and 1b in his both hands.

Also, as shown in Figure 4, a straight line A passing through the base articulation regions of the fingers of the both hands grasping the cylindrical portions of the lens barrels 1a and 1b, together with the upper inclined surfaces B of the cylindrical portions, is forwardly obliquely lowered. Thus, the observer can easily hold the binoculars in the observation position without raising his arms greatly and further twisting his wrists toward this side to position the straight line A along the horizontal driection as in the prior-art binoculars.

As described above, according to the present invention, the cylindrical portions of the lens barrels from the vicinity of the eyepiece portion to the objective side end portion are formed into the shape of inclined cylindrical portions obliquely lowered toward and along the object of observation and therefore, together with the upper inclined surfaces of the cylindrical portions, the straight lines passing through the base articulation regions of the fingers of both hands grasping the lens barrels are obliquely lowered as previously described, and the observer can observe in the horizontal direction while keeping such state. Therefore, the observer can save trouble without raising his arms greatly and twisting his wrists toward this side to position the aforementioned straight lines in the horizontal direction as in the prior art. Further, because the necessity of twisting the wrists toward this side is eliminated as previously described, the observer will not feel fatigued even if he continues to observe the image of a distant object of observation through the eyepieces while keeping the observation posture.

In the prior-art binoculars as shown in Figure 5, there is the problem that when the observer grasps the right and left lens barrels 11a and 11b in his both hands and effects the adjustment of focus, his index fingers will not reach the focusing knob 14 if his hands are small, and to solve this problem, the observer will have to shift at least one of his hands to the upper portion of the lens barrel 11a or 11b shown in Figure 8 and bring the index finger of that hand into contact with the focusing knob 14, and if the observer shifts one of his hands to the upper portion of one lens barrel, it will become difficult to grasp the lens barrel. This has led to the disadvantage that the operation of focus adjustment is cumbersome to an observer having small hands and the operability becomes poor. However, if as in the embodiment of the present invention, the focusing knob is disposed below the plane containing the optic axes of the respective eyepieces, even an observer having small hands can bring the thumbs of his hands grasping the lens barrels into contact with the focusing knob, and the observer can easily rotatively operate the knob by his thumbs while grasping the lens barrels.

## Claims

1. Binoculars to be supported by an observer's hands and through which the image of an object of observation can be enlargedly observed, including:
- a pair of right and left observation optical systems each having an objective lens (3a; 3b), an eyepiece (2a; 2b) disposed so that the optical axis (ℓ₁;ℓ₃) thereof is parallel to the optical axis (ℓ₂;ℓ₄) of the respective objective lens (3a; 3b) and enabling the image of said object of observation to be enlargedly observed therethrough, and reflecting optical means (4a, 5a; 4b, 5b) for directing the image of the object of observation formed by said objective lens (3a; 3b) to said respective eyepiece (2a; 2b), wherein the optical axes (ℓ₁; ℓ₃) of said eyepieces (2a; 2b) are disposed in a plane different from the plane containing the optical axes (ℓ₂; ℓ₄) of said objective lenses (3a; 3b),
- a pair of lens barrels (1a; 1b) being mirrorsymmetrical with respect to a symmetry plane between them and holding the respective observation optical systems therein;
- lens barrel connecting means including a shaft (7) provided between said pair of lens barrels (1a; 1b) and in parallelism to the optical axes (ℓ₂;ℓ₄) of said objective lenses (3a; 3b) and connecting said pair of lens barrels (1a; 1b) together for rotational displacement about said shaft (7) so that the optical axes (ℓ₁;ℓ₃) of said right and left eyepieces (2a; 2b) are arranged to move in parallel to each other,
characterized in that,
said lens barrels (1a; 1b) from the objective lens side end portion to the vicinity of the eyepiece side end portion are of cylindrical shape having their axes inclined with respect to the optical axes of the eyepieces and of the objective lenses.

2. Binoculars according to claim 1, wherein said reflecting optical means is an erect prism for erecting the image of the object of observation formed by said objective lens (3a; 3b), said erect prism being comprised of at least two rectangular prisms (4a, 5a; 4b, 5b).

3. Binoculars according to claim 1 or 2, further including a focusing knob (8) for focus adjustment rotatably supported on the eyepiece side of said shaft (7) to move said objective lenses (3a; 3b) in the direction of the optical axes (ℓ₂; ℓ₄) thereof, with said focusing knob (8) being provided such that it lies, during normal use of the binoculars, below the plane containing the optical axes (ℓ₁; ℓ₃) of said eyepieces.

## Patentansprüche

1. Fernglas, welches von Händen eines Betrachters gehalten wird, und durch das das Bild eines Betrachtungs-Objekts vergrößert gesehen werden kann, umfassend:
- ein Paar aus einem rechten und einem linken optischen Betrachtungssystem mit jeweils einer Objektivlinse (3a; 3b), einem Okular (2a; 2b), welches derart angeordnet ist, daß seine optische Achse (l₁, l₃) parallel zu der optischen Achse (l₂; l₄) der zugehörigen Objektivlinse (3a; 3b) verläuft, und welches eine Betrachtung des Betrachtungs-Objektes durch das System hindurch in vergrößertem Maßstab erlaubt, und mit jeweils einer reflektierenden optischen Einrichtung (4a, 5a; 4b, 5b) zum Lenken des von der Objektivlinse (3a; 3b) gebildeten Bildes des Betrachtungs-Objekts auf das jeweilige Okular (2a; 2b), wobei die optischen Achsen (l₁; l₃) der Okulare (2a; 2b) in einer Ebene angeordnet sind, die verschieden ist von der Ebene, welche die optischen Achse (l₂; l₄) der Objektivlinsen (3a; 3b) enthält,
- ein Paar Linsenfassungen (1a; 1b), die spiegelsymmetrisch zu einer zwischen ihnen liegenden Symmetrieebene angeordnet sind und die jeweiligen optischen Betrachtungssysteme in sich aufnehmen;
- eine Linsenfassungs-Verbindungseinrichtung mit einer Welle (7), die zwischen dem Paar von Linsenfassungen (1a; 1b) und parallel zu den optischen Achsen (l₂; l₄) der Objektivlinsen (3a; 3b) verläuft und das Paar von Linsenfassungen (1a; 1b) miteinander verdrehbar um die Welle (7) verbindet, so daß die optischen Achsen (l₁; l₃) des rechten und des linken Okulars (2a; 2b) derart angeordnet sind, daß sie sich parallel zueinander bewegen,
dadurch gekennzeichnet, daß
die Linsenfassung (1a; 1b) von dem objektivlinsenseitigen Endabschnitt zu der Nähe des okularseitigen Endabschnitts zylindrische Form haben, wobei ihre Achsen bezüglich der optischen Achsen der Okulare und der Objektivlinsen geneigt sind.

2. Fernglas nach Anspruch 1, bei dem die reflektierende optische Einrichtung ein Aufricht-Prisma ist, um das von der Objektivlinse (3a; 3b) gebildete Bild des Betrachtungs-Objekts aufzurichten, wobei das Aufricht-Prisma aus mindestens zwei rechtwinkligen Prismen (4a, 5a; 4b, 5b) besteht.

3. Fernglas nach Anspruch 1 oder 2, gekennzeichnet durch einen zur Scharfeinstellung vorgesehenen Einstellknopf (8), der drehbar auf der Okularseite der Welle (7) gelagert ist, um die Objektivlinsen (3a, 3b) in der Richtung ihrer optischen Achsen (l₂; l₄) zu bewegen, wobei der Einstellknopf (1) derart vorgesehen ist, daß er beim normalen Gebrauch des Fernglases unterhalb der Ebene liegt, welche die optischen Achsen (l₁; l₃) der Okulare enthält.

## Revendications

1. Jumelles destinées à être supportées par des mains d'un observateur et à travers lesquelles l'image d'un objet d'observation peut être observée de manière agrandie, incluant:
- une paire de systèmes optiques d'observation droit et gauche, chacun ayant une lentille d'objectif (3a ; 3b), un oculaire (2a ; 2b) disposé de telle sorte que l'axe optique (l₁ ; l₃) de celui-ci est parallèle à l'axe optique (l₂ ; l₄) de la lentille d'objectif respective (3a ; 3b) et permettant à l'image dudit objet d'observation d'être observée de manière agrandie au travers, et des moyens optiques réfléchissants (4a, 5a ; 4b, 5b) pour diriger l'image de l'objet d'observation formée par ladite lentille d'objectif (3a ; 3b) vers ledit oculaire respectif (2a ; 2b), dans lequel les axes optiques (l₁ ; l₃) desdits oculaires (2a ; 2b) sont disposés dans un plan différent du plan contenant les axes optiques (l₂ ; l₄) desdites lentilles d'objectif (3a ; 3b),
- une paire de tubes d'objectif (1a ; 1b) étant en symétrie de miroir par rapport à un plan de symétrie entre eux et maintenant les systèmes optiques d'observation respectifs à l'intérieur ;
- des moyens de liaison de tubes d'objectif incluant une tige (7) prévue entre ladite paire de tubes d'objectif (1a ; 1b) et parallèlement aux axes optiques (l₂ ; l₄) desdites lentilles d'objectif (3a ; 3b) et reliant ladite paire de tubes d'objectif (1a ; 1b) ensemble pour un déplacement rotatif autour de ladite tige (7) de telle sorte que les axes optiques (l₁ ; l₃) desdits oculaires droit et gauche (2a ; 2b) sont agencés pour bouger parallèlement l'un à l'autre,
caractérisées en ce que,
lesdits tubes d'objectif (1a ; 1b) depuis la partie d'extrémité côté lentille d'objectif vers la proximité de la partie d'extrémité côté oculaire sont de forme cylindrique ayant leurs axes inclinés par rapport aux axes optiques des oculaires et des lentilles d'objectif.

2. Jumelles selon la revendication 1, dans lesquelles lesdits moyens optiques réfléchissants sont un prisme droit pour redresser l'image de l'objet d'observation formé par ladite lentille d'objectif (3a ; 3b), ledit prisme droit comprenant au moins deux prismes rectangulaires (4a, 5a ; 4b, 5b).

3. Jumelles selon la revendication 1 ou 2, comprenant en outre un bouton de mise au point (8) pour un ajustement de mise au point supporté de manière rotative sur le côté d'oculaire de ladite tige (7) pour déplacer lesdites lentilles d'objectif (3a ; 3b) dans la direction des axes optiques (l₂ ; l₄) de celle-ci, ledit bouton de mise au point (8) étant prévu de telle sorte qu'il soit disposé, pendant l'utilisation normale des jumelles, au-dessous du plan contenant les axes optiques (l₁ ; l₃) desdits oculaires.
